# EUROPÄISCHE PATENTSCHRIFT

(11) **EP 3 170 631 B1**
(45) Veröffentlichungstag und Bekanntmachung des Hinweises auf die Patenterteilung: **27.01.2021**
(21) Anmeldenummer: 16002414.7
(22) Anmeldetag: 14.11.2016
(51) Int. Cl.: B26D 3/16, B26D 3/11, B26D 5/08, F16L 1/028, B23D 79/12, B26D 5/10, B26D 1/30, B26D 3/08, B26D 7/26

(54) **VERFAHREN UND VORRICHTUNG ZUM BEARBEITEN EINES ZYLINDRISCHEN WERKSTÜCKS**
DEVICE AND METHOD FOR PROCESSING A CYLINDRICAL WORKPIECE
PROCÉDÉ ET DISPOSITIF DE CONTRÔLE D'UN USINAGE D'UNE PIÈCE CYLINDRIQUE

(30) Priorität: 20.11.2015 DE 102015014960
(43) Veröffentlichungstag der Anmeldung: 24.05.2017
(73) Patentinhaber: TRACTO-TECHNIK GmbH & Co. KG, 57368 Lennestadt (DE)
(72) Erfinder: KOCH, Elmar, 59889 Eslohe (DE); HANSES, Andreas Joachim, DE 57399 Kirchhundem (DE); FISCHER, Sebastian, 57368 Lennestadt (DE); KÖPER, Martin, 57439 Attendorn (DE); SCHUMACHER, Philip, 57368 Lennestadt (DE)
(74) Vertreter: Tilmann, Max Wilhelm

(56) Entgegenhaltungen:
- DE-A1-102013 017 374
- US-A- 2 408 517
- US-A- 3 166 620
- US-A1- 2011 056 081
- US-B1- 9 505 067

## Beschreibung

Die vorliegende Erfindung betrifft ein Verfahren und eine Vorrichtung zum Bearbeiten eines zylindrischen Werkstücks, insbesondere betrifft die Erfindung ein Bearbeiten eines Rohrs, einer Rohrleitung oder eines Kabels, welches bereits im Erdreich verlegt ist und der Zugriff zum Bearbeiten mittels einer engen Baugrube erfolgt.

Beispielsweise können unterschiedliche Arbeiten an einem Rohr, einer Rohrleitung oder einem Kabel in einer Baugrube mit kleinem Durchmesser durchzuführen sein. Für diese Arbeiten ist eine einfache und robuste Antriebsmöglichkeit für unterschiedliche Werkzeuge gewünscht, wobei der Antrieb möglichst manuell ohne Fremdenergie möglich sein sollte.

Aus DE 10 2013 017 374 A1 ist beispielsweise eine Vorrichtung zum Abschälen der äußeren Schicht eines Rohres oder Kabels bekannt, bei dem ein Werkzeugträger verwendet wird, der mittels zweier starrer Betätigungsarme von außerhalb der Baugrube betätigt werden kann. Die Vorrichtung wird durch Schieben an einem und Ziehen an dem anderen der beiden Betätigungsarme betätigt. Aufgrund der starr ausgeführten Betätigungsarme ist die Betätigung hinsichtlich der Effizienz eingeschränkt, da der mögliche Schwenkwinkel mit zunehmender Tiefe der Baugrube abnimmt.

US 3,166,620 A offenbart eine Vorrichtung zum Einschneiden in ein Rohr entlang vorbestimmter Linien. An einem Träger ist ein Schneidbrenner angeordnet, der um den Umfang eines Rohrs entlang eines Führungsrings zum Einschneiden in das Rohr geführt werden kann. Der Führungsring ist dabei an einer am Rohr fixierten Vorrichtung drehfest angeordnet, so dass sich der Schneidbrenner gegenüber dem Führungsring relativ bewegen kann.

Der Erfindung liegt nun die Aufgabe zugrunde, ein Verfahren bzw. eine Vorrichtung zum Bearbeiten eines zylindrischen Werkstücks zu schaffen, bei dem die vom Bediener aufgewendete Kraft effizient umgesetzt wird und/oder eine Betätigung auch bei kleinen und/oder tiefen Baugruben möglich ist.

Die Aufgabe wird gelöst durch den Gegenstand der unabhängigen Ansprüche. Vorteilhafte Ausführungsformen sind Gegenstand der Unteransprüche.

Der Erfindung liegt der Gedanke zugrunde, ein Verfahren bzw. eine Vorrichtung zum Bearbeiten eines zylindrischen Werkstücks zu schaffen, welches bzw. welche von oberhalb der Erdoberfläche aus durchgeführt bzw. betätigt werden kann, bei dem das Antriebsmittel zum Bewegen des Werkszeugs am zylindrischen Werkstück in wiederholter Weise vom Werkzeug bzw. Werkzeugträger gelöst und wieder in Anlage zu diesem zum Bewegen des Werkzeugträgers bzw. des Werkzeugs gebracht werden kann. Die Erfinder haben erkannt, dass es auf eine feste, permanente Verbindung eines Betätigungsmittels zum Werkzeug während des Bearbeitungsvorgangs nicht ankommt, um eine effiziente Übertragung der Bewegung des Betätigungsmittels zum Werkzeug zu erreichen. Die Erfinder haben sich von der Vorstellung gelöst, dass es auf eine feste Verbindung zwischen dem Werkzeug und dem Antriebsmittel ankommt.

Die Erfindung schafft ein Verfahren zum Bearbeiten eines zylindrischen Werkstücks, wobei das Verfahren die folgenden Schritte aufweist: Anordnen eines Werkzeugträgers, der ein Werkzeug aufweist, am zylindrischen Werkstück, Anlegen eines Zugmittels am Werkzeugträger, Übertragen der auf das Zugmittel ausgeübten Kraft auf das Werkzeug zum Ausüben einer Bewegung des Werkzeugträgers um das Werkstück, Lösen des Zugmittels vom Werkzeugträger und mehrmaliges Wiederholen eines erneuten Anlegens des Zugmittels und Übertragens der auf das Zugmittel ausgeübten Kraft auf das Werkzeug sowie Lösens des Zugmittels zwecks Bearbeitung des Werkstücks.

Das Werkzeug und der Werkzeugträger können am zylindrischen Werkstück verbleiben und nur das vom Werkzeugträger gelöste Zugmittel muss wieder erneut angelegt werden. Die Schwierigkeit besteht in dem (erneuten) Zugriff auf den Werkzeugträger in einer kleinen und/oder tiefen Baugrube. Erfindungsgemäß wurde erstmals erkannt, ein Lösen des Zugmittels vom Werkzeugträger vorzusehen, obwohl der Fachmann die Schwierigkeit zu überwinden hatte, sich von seiner eingefahrenen Denkvorstellung zu lösen, dass insbesondere in engen und/oder tiefen Baugruben eine feste Verbindung zwischen dem Zugmittel und dem Werkzeugträger vorliegen muss. Eine lösbare Verbindung zwischen dem Zugmittel und dem Werkzeugträger wurde allein aufgrund des bestehenden Vorurteils nicht in Erwägung gezogen. Im Stand der Technik waren der Werkzeugträger und das Zugmittel keine derartig lösbar miteinander verbundenen Elemente, da das Einbringen und die Entnahme des Werkzeugträgers aus der Baugrube mittels des Zugmittels erfolgte. Auch aus diesem Grunde hat die Fachwelt kein einfaches Lösen des Zugmittels vom Werkzeugträger vorgesehen. Das Bergen des Werkzeugträgers aus der Baugrube wurde entgegen der bisher geltenden Überlegung als wichtigere Funktion als die Betätigung des Werkzeugträgers angesehen.

Das Anlegen des Zugmittels am Werkzeugträger kann dadurch erreicht werden, dass ein Kraft- und/oder Formschluss zwischen dem Zugmittel und dem Werkzeugträger ausgebildet wird, der von oberhalb der Baugrube gelöst werden kann. Das Lösen kann allein durch ein Bewegen des Zugmittels relativ zum Werkzeugträger erreicht werden. Ebenso kann ein Anlegen durch eine relative Bewegung des Zugmittels zum Werkzeugträger erreicht werden. Insbesondere kann vorgesehen sein, dass ein Zugmittel verwendet wird, welches an einem oder mehreren Angriffspunkten des Werkzeugträgers in Anlage gelangen kann. An dem Zugmittel können komplementär ausgebildete Eingriffselemente vorgesehen sein. Mit dem Zugmittel kann eine Kraft auf den Werkzeugträger ausgeübt werden. Insbesondere können an dem Werkzeugträger Angriffspunkte in Form von (Rast-) Vorsprüngen und/oder (Rast-) Ausnehmungen vorgesehen sein, die sich in Umfang verteilt, insbesondere äquidistant verteilt, um das zylindrische Werkstück bei angelegtem Werkzeugträger erstrecken.

Wird der Werkzeugträger um das zylindrische Werkstück bewegt, so bewegen sich auch die Angriffspunkte. Das Zugmittel kann dann mit unterschiedlichen Angriffspunkten in Anlage gelangen, wobei die Angriffspunkte, mit denen das Zugmittel den Werkzeugträger bewegt hat, um einen Winkel um das zylindrische Werkzeug bewegt wurden und das Zugmittel mit anderen Angriffspunkten als bei der letzten Bewegung in Anlage gelangen kann. Es kann vorgesehen sein, dass das Zugmittel an einer Seite des Werkzeugträgers eine Druckkraft auf die Angriffspunkte ausübt und auf der gegenüberliegenden Seite des Werkzeugträgers eine Zugkraft ausübt. Das Zugmittel kann, insbesondere gabel- oder hakenförmige, Vorsprünge und/oder Ausnehmungen aufweisen, die mit komplementär ausgebildeten Ausnehmungen und/oder Vorsprüngen in Reibschluss, Kraftschluss und/oder Formschluss gebracht werden kann. Die genannten Vorsprünge und Ausnehmungen können als Rastbauelement (beispielsweise Rastungen) ausgebildet sei; es ist auch möglich, dass Vorsprünge und/oder Ausnehmungen eine Fläche ausbilden, die als flächenhaft ausgebildete Hafteingriffsfläche am Werkzeugträger ausgestaltet ist, die in Reibschluss mit einer flächenhaft ausgebildeten Hafteingriffsfläche am Zugmittel gebracht werden kann.

Der Begriff "zylindrisches Werkstück" umfasst im Sinne der Erfindung insbesondere ein im Erdreich verlegtes Rohr, Rohrleitung oder Kabel, wobei der Zugriff zum Bearbeiten des zylindrischen Werkstücks mittels einer engen Baugrube erfolgt. Unter einer "engen Baugrube" wird im Sinne der Erfindung eine Baugrube mit einem Durchmesser verstanden, der den Zugriff auf das Rohr von oben erschwert, da die Baugrube im Sinne der Erfindung einen Durchmesser von kleiner ungefähr 2 m, insbesondere kleiner als ungefähr 1,5 m, bevorzugt einen Durchmesser von kleiner als ungefähr 1 m, insbesondere bevorzugt einen Durchmesser von kleiner als 70 cm aufweist, wobei sich das zylindrische Werkstück in einer Tiefe von mehr als ungefähr 70 cm, bevorzugt mehr als ungefähr 1m, insbesondere bevorzugt mehr als ungefähr 1,5 m und bis zu ungefähr 3 m befindet.

Bei dem zylindrischen Werkstück kann es sich um Rohre, Rohrleitungen oder Kabel handeln, die über längere Strecken als Leitungen mittels eines Bohrgeräts, insbesondere eines sogenannten HDD-Bohrgerätes, grabenlos ins Erdreich eingezogen sind, handeln. Entlang solcher Strecken kann es erforderlich sein, Nebenleitungen wie Hausanschlussleitungen an eine Hauptanleitung anzubinden. Dies geschieht vorteilhaft in der Weise, dass zunächst an der vorgesehenen Abzweigstelle über der Hauptleitung eine Baugrube mit möglichst geringen Ausmaßen ausgehoben wird (ein sogenanntes Keyhole). Anschließend werden sogenannte Druckanbohrventile (DAV) oder Druckanbohrarmaturen (DAA) auf einer Hauptleitung aufgeschweißt oder mittels Schellen aufgeschraubt. An diesen können die Nebenleitungen/Hausanschlussleitungen angebunden werden. Hierzu kann es erforderlich sein, eine Bearbeitung des Rohrs, der Rohrleitung oder des Kabels vorzunehmen, indem die Isolierschicht von dem Rohr, der Rohrleitung oder dem Kabel entfernt wird. Es kann darüber hinaus erforderlich sein, eine bestehende Oxidschicht, die an dem Rohr, der Rohrleitung oder dem Kabel vorhanden ist, vor einem etwaigen Schweißen zu entfernen, da nur so eine sichere Schweißverbindung erstellt werden kann.

Der Begriff "Bearbeiten" im Sinne der Erfindung umfasst insbesondere ein Bearbeiten in umfänglicher Richtung des zylindrischen Werkstücks, vorzugsweise mit einem Messer oder Schälmesser, so dass in das zu bearbeitende zylindrische Werkstück ein Schnitt eingebracht wird. Insbesondere umfasst der Begriff "Bearbeiten" ein Einschneiden in die äußere Schicht bzw. Schichten eines zylindrischen Werkstücks, beispielsweise eines Rohres, einer Rohrleitung oder eines Kabels, bei dem ein Messer auf das Rohr, die Rohrleitung bzw. das Kabel aufgesetzt wird und dann entweder komplett oder nur in einem bestimmten Winkelbereich händisch um das Rohr, die Rohrleitung bzw. das Kabel herum oder hin und her bewegt wird.

Zwischen dem Zugmittel und dem Werkzeugträger kann zur Übertragung der auf das Zugmittel ausgeübten Kraft auf den Werkzeugträger eine reib- bzw. kraftschlüssige Verbindung vorliegen. Es ist auch möglich, dass Zugmittel und Werkzeugträger für eine formschlüssige Verbindung miteinander zur Übertragung der Kraft ausgestaltet sind. Der Werkzeugträger und/oder das Zugmittel können Mitnehmer bzw. Zähne aufweisen. Mindestens ein Mitnehmer oder mindestens ein Zahn kann an dem Zugmittel oder dem Werkzeugträger ausgestaltet sein, wobei an dem entsprechend anderen der beiden Elemente ein in den Mitnehmer oder den Zahn eingreifendes Gegenelement ausgebildet ist.

Zur Übertragung von sehr hohen Drehmomenten ist es möglich, dass das Zugmittel den Werkzeugträger mindestens einmal komplett umschlingt. In einer bevorzugten Ausführungsform weist das Zugmittel eine Schubsteifigkeit bzw. Federwirkung derart auf, dass sich die Umschlingung wieder löst, wenn die Zugspannung auf beiden Enden aufgehoben wird. Ein für eine komplette Umschlingung geeignetes Zugmittel ist ein Drahtseil.

Mittels des erfindungsgemäßen Verfahrens ist es möglich, einen Werkzeugträger von oberhalb des Erdreichs in die Baugrube abzusenken und auf ein zylindrisches Werkstück aufzusetzen. Der Werkzeugträger ist von oben frei zugänglich. Zum Antreiben des Werkzeugträgers wird der Werkzeugträger mit einem Zugmittel in Kontakt gebracht; das Zugmittel wird am Werkzeugträger angelegt. Mittels zur Oberfläche geführten Enden des Zugmittels ist ein Antrieb möglich. Der Werkzeugträger kann in Rotation versetzt werden, indem die beiden Enden des Zugmittels angezogen und leicht auf Spannung gehalten werden. Das Zugmittel kann den Werkzeugträger zumindest teilweise umschlingen. Dabei kann je nach gewünschter Drehrichtung ein Ende des Zugmittels stärker angezogen werden als das andere. Durch ein Aufbringen einer leichten Gegenkraft am anderen Ende des Zugmittels wird sichergestellt, dass ein sicherer Kontakt zwischen Zugmittel und Werkzeugträger vorliegt. Durch die ungleich großen Zugkräfte an den beiden Enden des Zugmittels wird der Werkzeugträger in Rotation versetzt. Nach Beendigung des Zuges, der üblicherweise einer Armlänge des Benutzers entspricht, werden beide Enden des Zugmittels leicht entlastet, so dass das Zugmittel außer Anlage vom Werkzeugträger gelangt. Im Anschluss kann dann im Vergleich zum vorherigen Zug ein entgegengesetzter Zug durchgeführt werden (Rückhub). Hierbei ist es möglich, dass keine Kraft auf den Werkzeugträger übertragen werden kann, da Zugmittel und Werkzeugträger außer Eingriff miteinander sind. Nach Beendigung des Rückhubes kann das Zugmittel wieder in Anlage mit dem Werkzeugträger gebracht werden und beide Enden des Zugmittels können wieder "vorgespannt" und im Anschluss ein Ende des Zugmittels wieder stärker unter Spannung gesetzt werden, wobei am anderen Ende des Zugmittels eine leichte Gegenspannung gehalten wird. Das Anlegen und Lösen des Zugmittels sowie das Übertragen der auf das Zugmittel ausgeübten Kraft auf das Werkzeug wird mehrmalig wiederholt.

Das Verfahren ist sehr einfach und kostengünstig, wobei es sich aber auch durch eine hohe Effizienz der eingebrachten und übertragenen Kraft vom Zugmittel auf den Werkzeugträger auszeichnet. Das mehrfache Wiederholen des Lösens und wieder Anlegen des Zugmittels ist überraschenderweise beispielsweise effizienter als ein Aufspulen eines Zugmittels auf den Werkzeugträger mit einem nachfolgenden (kontinuierlichen) Abspulen, weil der Vorgang des Aufspulens sich als zu aufwendig erwiesen hat. Das Verfahren ist zudem nicht an eine feste Tiefe des im Erdreich befindlichen zylindrischen Werkstücks gebunden. Die Bedienung kann auch von ungeschulten Personen ohne besondere Vorkenntnisse durchgeführt werden. Eine externe Antriebsquelle außer der bedienenden Person ist nicht notwendig. Das Verfahren ist weder witterungsabhängig noch störanfällig. Mit dem Verfahren kann jedwede Bearbeitung eines zylindrischen Werkstücks, welches im Erdreich angeordnet ist, auch unter beengten Platzbedingungen durchgeführt werden, die eine Unterbrechung des Bewegungsvorgangs des Werkzeugs erlauben kann.

Insbesondere kann mit dem Verfahren ein Schutzmantel auf einem PE-Rohr (als zylindrisches Werkstück) eingeschnitten (eine Möglichkeit des Bearbeitens) werden. Ein Entfernen des Schutzmantels eines PE-Rohrs kann notwendig sein, um das Kernrohr freizulegen und für den Aufbau einer Armatur vorzubereiten. Das Einschneiden des Mantels kann spiralförmig in mehreren Umläufen um das PE-Rohr erfolgen. Die Anzahl der Umläufe kann abhängig von der Baugröße der aufzubauenden Armatur sein. Durch das spiralförmige Einschneiden des Schutzmantels kann dieser vom Rohr entfernt werden.

In einer bevorzugten Ausführungsform kann das zylindrische Werkstück mit dem Werkzeugträger umgeben werden. Mittels der Ausgestaltung des Werkzeugträgers, der das zylindrische Werkstück umfangsseitig umgibt, kann ein einfaches Bearbeiten in einer Umfangsrichtung durchgeführt werden, bei dem eine Führung des Werkzeugs im Werkzeugträger bei der Bewegung des Werkzeugträgers um das zylindrische Werkstück geführt werden kann. Beispielsweise kann der Werkzeugträger ein oder mehrere kreissegmentförmige Abschnitte aufweisen, welche das zylindrische Werkstück zumindest teilweise entlang des Umfangs überspannen bzw. umgreifen können. Die kreissegmentförmigen Abschnitte des Werkzeugträgers können mittels eines oder mehrerer Verbindungselemente miteinander verbunden sein und derart das zylindrische Werkstück umgeben, dass das im Werkzeugträger gehaltene Werkzeug am zylindrischen Werkstück anliegt bzw. mit einer Kraft in Richtung des zylindrischen Werkstücks gedrückt wird. Der Werkzeugträger kann beispielsweise mehrere mittels eines Drehpunkts bzw. Drehachse verbundene kreissegmentförmige Abschnitte aufweisen. Zum Anpassen des Werkzeugträgers an unterschiedliche Durchmesser eines zylindrischen Werkstücks kann vorgesehen sein, dass mittels eines geeigneten Verbindungselements ein oder mehrere kreissegmentförmige Abschnitte des Werkzeugträgers von diesem entfernt bzw. diesem hinzugefügt werden können, um ein im Durchmesser kleineres zylindrisches Werkstück bzw. ein im Durchmesser größeres zylindrisches Werkstück zu bearbeiten. Es kann auch vorgesehen sein, dass Segmente des Werkzeugträgers an verschiedenen Positionen der Segmente mittels Bolzen verbunden werden können, um den Umfang, den die Segmente überspannen können, zu vergrößern oder zu verkleinern.

Vorzugsweise ist das Zugmittel ein zumindest teilweise biegeschlaffes Zugmittel, um das Anlegen und Lösen des Zugmittels vom Werkzeugträger zu vereinfachen. Die Handhabung kann vereinfacht werden. Ein zumindest teilweise biegeschlaffes Zugmittel kann in engen Baugruben ohne räumliche Beschränkungen auf vorbestimmte Durchmesser und/oder vorbestimmte Tiefen verwendet werden.

Vorzugsweise wird bei dem erfindungsgemäßen Verfahren der Werkzeugträger in einer Richtung um das zylindrische Werkstück gedreht. Unter einer "Richtung" im Sinne der Erfindung wird hier eine Umfangsrichtung verstanden, die demgemäß im Uhrzeigersinn oder entgegen dem Uhrzeigersinn bezogen auf den Querschnitt des zylindrischen Werkstücks erfolgen kann. Vorzugsweise wird die Bewegung des Werkzeugträgers in Umfangsrichtung durch eine Bewegung des Werkzeugträgers in longitudinaler Richtung des zylindrischen Werkstücks überlagert.

In einer bevorzugten Ausführungsform wird das Werkzeug im Werkzeugträger zumindest in einer Endposition verstellt, um beispielsweise in der Endposition ein gegenüber Zwischenpositionen verändertes Verhalten des Werkzeugs am zylindrischen Werkstück zu erreichen. Beispielsweise kann ein Messer zum Einschneiden eines Schutzmantels eines PE-Rohres in einer Endposition, insbesondere vor der Entnahme des Werkzeugträgers vom zylindrischen Werkstück, in eine Geradeposition (die Bearbeitungsposition des Werkzeugs verläuft im Wesentlichen parallel zur Querschnittsfläche des zylindrischen Werkstücks) gebracht werden, um einen geraden Schnitt am Schutzmantel zu erreichen, während zuvor - um einen Bereich in longitudinaler Erstreckung des zylindrischen Werkstücks freizulegen - eine Schrägstellung (die Bearbeitungsfläche des Werkzeugs verläuft im Wesentlichen unter einem Winkel von kleiner als ungefähr 45°, bevorzugt kleiner als 30°, mehr bevorzugt kleiner als 20°, insbesondere bevorzugt kleiner als 10° zur Querschnittsfläche des zylindrischen Werkstücks) des als Messer ausgestalteten Werkzeugs sinnvoll war. Der Begriff "Endposition" im Sinne der Erfindung umfasst insbesondere eine Position, bei der ein Wechsel in der Bearbeitungsart mit dem Werkzeug am zylindrischen Werkstück erzielt werden soll. Insbesondere kann eine Endposition eine Position des Werkzeugträgers sein, in der nach erfolgter Bearbeitung durch das Werkzeug der Werkzeugträger vom zylindrischen Werkstück entfernt wird.

Die Erfindung schafft auch eine Vorrichtung zum Bearbeiten eines zylindrischen Werkstücks, welche ein an einem Werkzeugträger gehaltenes Werkzeug umfasst. Der Werkzeugträger ist derart ausgestaltet, dass der Werkzeugträger das zylindrische Werkstück zumindest teilweise umgibt, wobei ein vom Werkzeugträger lösbares Zugmittel vorgesehen ist, und das Zugmittel und der Werkzeugträger derart ausgestaltet sind, dass bei Anlage des Zugmittels am Werkzeugträger eine auf das Zugmittel ausgeübte Kraft den Werkzeugträger dreht.

Vorzugsweise ist das Zugmittel zumindest teilweise biegeschlaff, wodurch ein Antriebsmittel geschaffen ist, welches auch bei sehr geringen räumlichen Gegebenheiten in einer kleinen zylindrischen Baugrube verwendet werden kann. Bei dem Zugmittel kann es sich insbesondere um eine Kette, ein Drahtseil oder einen Gurt handeln. Das Zugmittel ist insbesondere in dem für die Anlage mit dem Werkzeugträger vorgesehenen Bereich, insbesondere einem mittleren Bereich des Zugmittels, biegeschlaff bzw. flexibel. An den Enden des Zugmittels, insbesondere in dem Bereich, die der Benutzer ergreifen kann, können starre Verbindungen und/oder Handgriffe vorgesehen sein.

In einer bevorzugten Ausführungsform sind am Werkzeugträger Führungselemente zum Führen des Werkzeugträgers relativ zum zylindrischen Werkstück vorgesehen. Bei den Führungselementen kann es sich insbesondere um Führungsrollen oder Gleitelemente handeln, die in Anlage zum zylindrischen Werkstück gelangen können und mittels derer der Werkzeugträger am zylindrischen Werkstück bewegt werden kann.

In einer bevorzugten Ausführungsform weist der Werkzeugträger ein Verstellmittel auf, mit dem das Werkzeug relativ im Werkzeugträger mit seiner Bearbeitungsfläche neigbar ist. Bei dem Verstellmittel kann es sich insbesondere um eine Schraube handeln, die von oberhalb des Erdreichs gedreht werden kann und die eine Kraft auf das Werkzeug aufweist, um dieses relativ zum Werkzeugträger und damit auch zum zylindrischen Werkstück, zu dem der Werkzeugträger ausgerichtet ist, zu neigen. Insbesondere kann das Werkzeug zwischen einer Geradeposition und einer Schrägstellung geneigt werden. Beispielsweise kann über die Neigung eine Kraft vom Werkzeug, welches in Eingriff mit dem zylindrischen Werkstück steht, auf den Werkzeugträger ausgeübt werden, welches zu einer longitudinalen Bewegung des Werkzeugträgers relativ zum zylindrischen Werkstück führt. Zudem kann über die Verstellmittel die Art der Bearbeitung des Werkzeugs auf das zylindrische Werkstück verändert werden.

In einer bevorzugten Ausführungsform weist der Werkzeugträger mindestens zwei, insbesondere kreisbogenförmig ausgestaltete, Segmente auf, die zumindest teilweise einen Winkelbereich des zylindrischen Werkstücks überspannen. Zudem kann die Vorrichtung in der bevorzugten Ausführungsform Verbindungselemente aufweisen, so dass der Werkzeugträger mit den Segmenten und/oder Verbindungselementen das zylindrische Werkstück umgibt. Bei den Verbindungselementen kann es sich insbesondere um Drehzapfen, Verrastungselemente oder Schrauben handeln. Die Segmente können durch eine Feder zusammengehalten werden oder können auch mechanisch zu einem geschlossenen Ring verriegelt oder verschraubt werden. Insbesondere kann der Werkzeugträger zwei mit einem Drehzapfen verbundene Segmente aufweisen, welche um das Werkstück greifen können.

Die vorstehenden Ausführungen stellen ebenso wie die nachfolgende Beschreibung beispielhafter Ausführungsformen keinen Verzicht auf bestimmte Ausführungsformen oder Merkmale dar.

Die Erfindung wird im Folgenden anhand von in den Zeichnungen dargestellten Ausführungsbeispielen näher erläutert.

In den Zeichnungen zeigen:
- Fig. 1: in einer Abfolge der Fig. 1a bis 1e eine Betätigung eines Werkzeugträgers mittels eines Zugmittels in einer schematischen Darstellung von der Seite;
- Fig. 2a, 2b, 2c: weitere Ausführungsformen des Zugmittels und des Werkzeugträgers in einer schematischen Darstellung von der Seite, wobei das Zugmittel in Anlage am Werkzeugträger angeordnet ist;
- Fig. 3: eine Ausführungsform eines Werkzeugträgers mit einem Zugmittel in einer schematischen Seitenansicht, wobei der Werkzeugträger an einem zylindrischen Werkstück in einer Baugrube angeordnet ist;
- Fig. 4: eine Ausführungsform eines Werkzeugträgers mit einem Zugmittel in einer teilweise geschnittenen Seitenansicht, wobei der Werkzeugträger an einem zylindrischen Werkstück angeordnet ist;
- Fig. 5 und 6: eine Ansicht auf den Werkzeugträger gemäß Fig. 4 in einer Richtung quer zur Seitenansicht der Fig. 4.

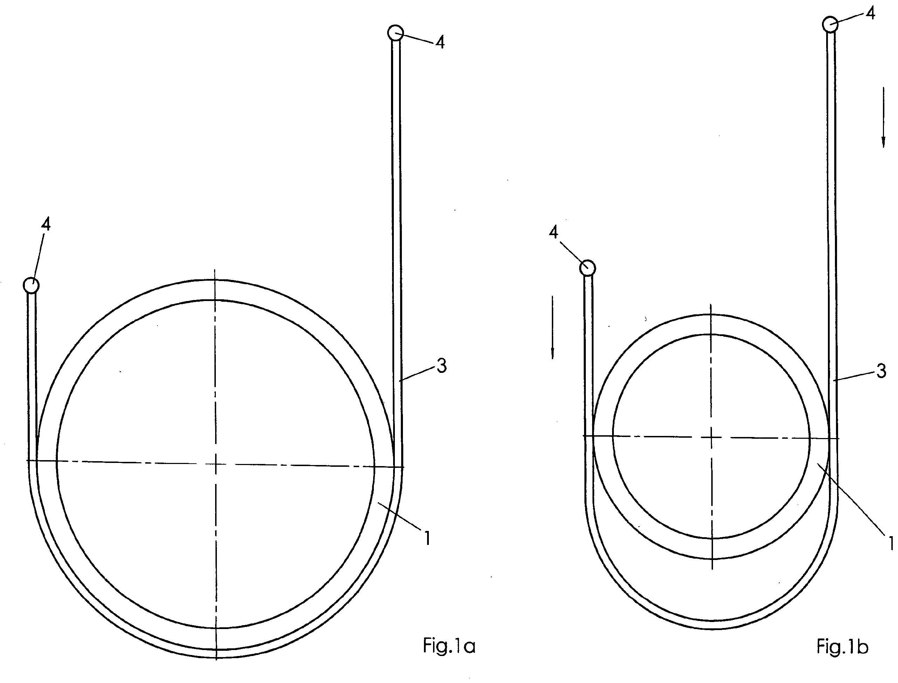

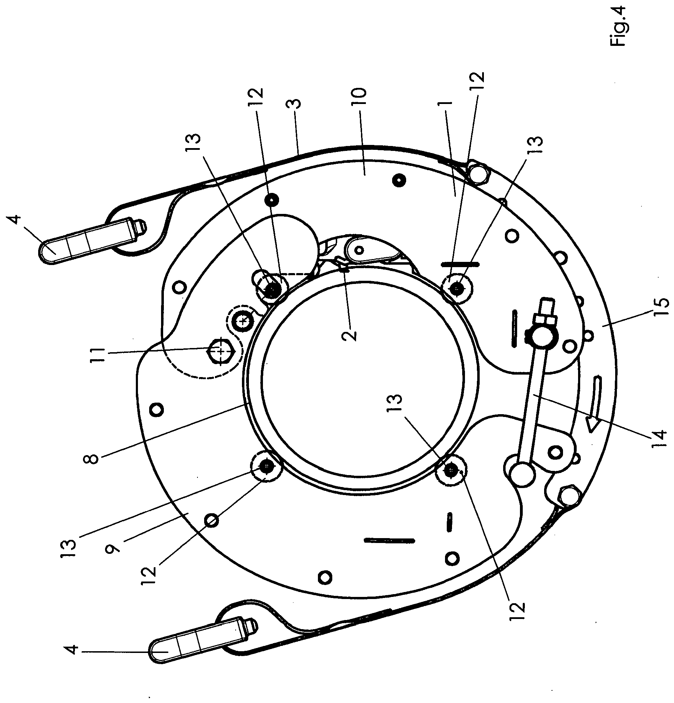

Die Figuren 1a bis 1e zeigen einen Bewegungsablauf, wie dieser beim Bearbeiten eines in den Figuren 1a bis 1e nicht dargestellten zylindrischen Werkstücks durchgeführt werden kann. An dem zylindrischen Werkstück kann ein Werkzeugträger 1 außen angeordnet werden, welcher ein in den Figuren 1a bis 1e nicht dargestelltes Werkzeug 2 (vergleiche Figur 4) aufweisen kann. Der Werkzeugträger 1 kann das zylindrische Werkstück zumindest teilweise umgeben. An dem Werkzeugträger 1 ist ein Zugmittel 3 angelegt, mit dem der Werkzeugträger 1 in Rotation gebracht werden kann. Das Zugmittel 3 weist Griffe 4 für eine Handbetätigung des Zugmittels auf, mit denen eine Zugkraft auf das Zugmittel 3 ausgeübt werden kann.

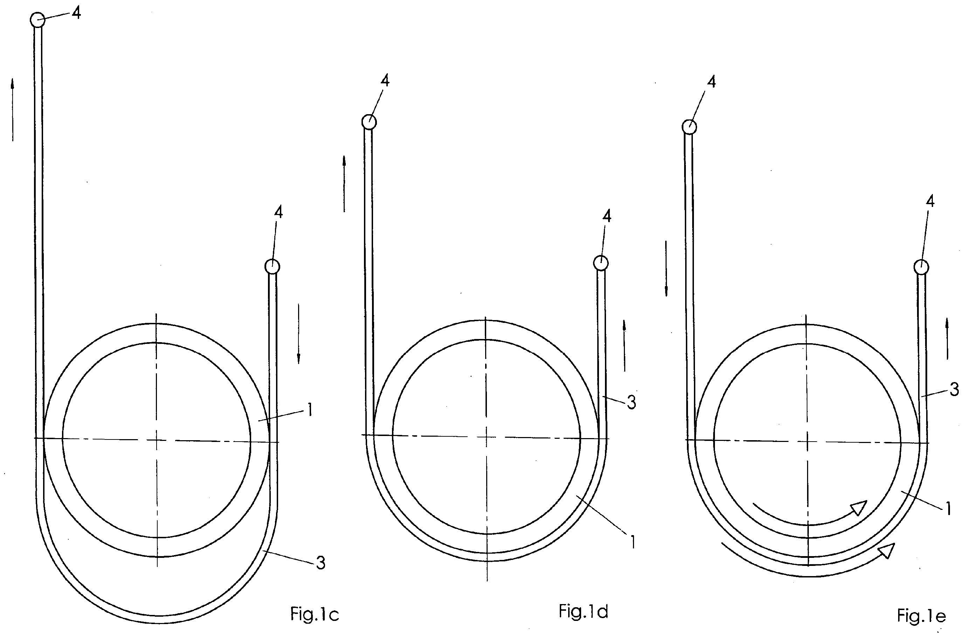

Mittels des Zugmittels 3 kann der Werkzeugträger 1 um den in den Figuren 1a bis 1e dargestellten Mittelpunkt des Werkzeugträgers 1 (und des nicht dargestellten zylindrischen Werkstücks) gedreht werden. Die Figur 1a zeigt ein Ende einer Betätigung des Zugmittels, bei dem schon eine Bewegung des Zugmittels 3 zur Rotation des Werkzeugträgers 1 geführt haben kann. Die beiden Enden des Zugmittels 3 sind in Bezug auf den Mittelpunkt des Werkzeugträgers 1 unterschiedlich lang. Die Figur 1b zeigt, dass die beiden Enden des Zugmittels 3 leicht entlastet werden, so dass sich das Zugmittel 3 von der Unterseite des Werkzeugträgers 1 lösen kann und die zumindest teilweise Umschlingung somit gelockert werden kann. Die Figur 1c zeigt die nachfolgende Bewegung, indem ein Ende des nun im Wesentlichen freien Zugmittels 3 angehoben (linkes Ende) und das andere Ende des Zugmittels 3 (rechtes Ende) abgesenkt wird, um einen nachfolgenden Zug beziehungsweise eine Rotation des Werkzeugträgers 1 vorzubereiten. Die Figur 1d zeigt, dass das Zugmittel 3 in Kontakt beziehungsweise in Anlage mit dem Werkzeugträger 1 gebracht wird, um die in der Figur 1e dargestellte Rotation (erkennbar an den die Bewegung symbolisierenden Pfeilen) des Werkzeugträgers 1 zusammen mit dem Zugmittel 3 durchführen zu können. Das rechte der beiden Enden des Zugmittels 3 in Figur 1e wird angezogen und an dem linken Ende des Zugmittels 3 wird eine leichte Gegenkraft ausgeübt, so dass ein sicherer Kontakt - zumindest ein Reibschluss - zwischen Zugmittel 3 und Werkzeugträger 1 vorhanden ist. Durch die ungleich großen an den beiden Enden des Zugmittels 3 anliegenden Kräfte wird der Werkzeugträger 1 in Rotation versetzt. Der Werkzeugträger 1 kann so lange gedreht werden, bis im Wesentlichen die in Figur 1a dargestellte Situation eintritt. Zum Bearbeiten eines zylindrischen Werkstücks mit einem an dem Werkzeugträger 1 angeordneten Werkzeug 2 kann das Zugmittel 3 wieder von dem Werkzeugträger 1 gelöst werden und die damit beginnend in Figur 1b beginnende Abfolge durchgeführt werden, mit der das Zugmittel 3 den Werkzeugträger 1 in Rotation versetzen kann.

In den Figuren 1a bis 1e ist ein vorwiegend im Wesentlichen reibschlüssiger Kontakt zwischen dem Zugmittel 3 und dem Werkzeugträger 1 dargestellt.

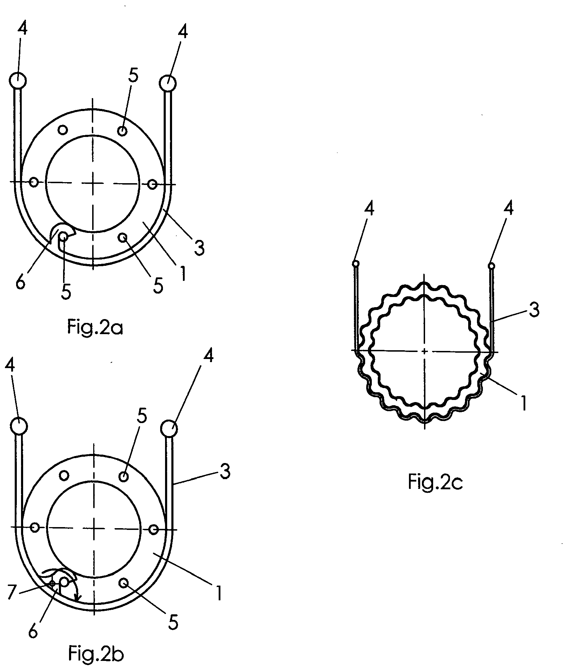

Die Figuren 2a bis 2c zeigen, dass auch eine formschlüssige Anlage alternativ und/oder zusätzlich vorhanden sein kann.

Bei dem in Figur 2a gezeigten Ausführungsbeispiel sind mehrere, hier sechs sich quer zur Bewegungsrichtung des Werkzeugträgers 1 erstreckende Zapfen 5 am Werkzeugträger 1 ausgebildet. Die Zapfen 5 sind im Wesentlichen winkeläquidistant um den Umfang des Werkzeugträgers 1 verteilt angeordnet. Die Fig. 2a zeigt ferner ein an dem Zugmittel 3 ausgebildeter Mitnehmer 6 in hakenförmiger Ausgestaltung, die eine Innenkontur aufweist, die zumindest teilweise der Außenkontur eines Zapfens 5 entspricht. Der Mitnehmer 6 ist in Eingriff mit einem der Zapfen 5, so dass zumindest in der Betätigungsrichtung, in der das Zugmittel 3 rechts angezogen wird und links abgesenkt wird, ein Formschluss vorliegt. In der durch das Zugmittel 3 aufgeprägten Bewegungsrichtung gegen den Uhrzeigersinn des Werkzeugträgers 1 nimmt der Mitnehmer 6 den Zapfen 5 des Werkzeugträgers 1 mit; der Werkzeugträger 1 wird gegen den Uhrzeigersinn gedreht.

Die Figur 2b zeigt einen am Werkzeugträger 1 ausgebildeten Mitnehmer 6, der mittels eines Bolzens 7 am Werkzeugträger 1 verschwenkbar befestigt ist. Der Bolzen 7 erstreckt sich in im Wesentlichen gleicher Richtung wie die Zapfen 5. Der Mitnehmer 6 weist an einem Ende eine Kontur auf, die der Außenkontur des Werkzeugträgers 1 entspricht. An dem anderen Ende weist der Mitnehmer 6 die aus der Fig. 2a bekannte hakenförmige Ausgestaltung auf. Gelangt das Zugmittel 3 in Anlage zum Werkzeugträger 1, so wird das eine endseitige Ende derart beaufschlagt, dass das beabstandete hakenförmige Ende des Mitnehmers 6 in formschlüssigem Eingriff mit den am Werkzeugträger 1 ausgestalteten Zapfen 5 gelangt.

Die Figur 2c zeigt einen formschlüssigen Eingriff des Zugmittels 3 am Werkzeugträger 1 mittels einer an der Außenkontur des Werkzeugträgers 1 vorliegenden Profilierung in Umfangsrichtung, die zumindest teilweise einer Profilierung des Zugmittels 3 entspricht. Die Profilierung des Zugmittels 3 kann über die Länge des Zugmittels 3 vorliegen, die im Wesentlichen der Länge eines Zuges am Zugmittel 3 entspricht.

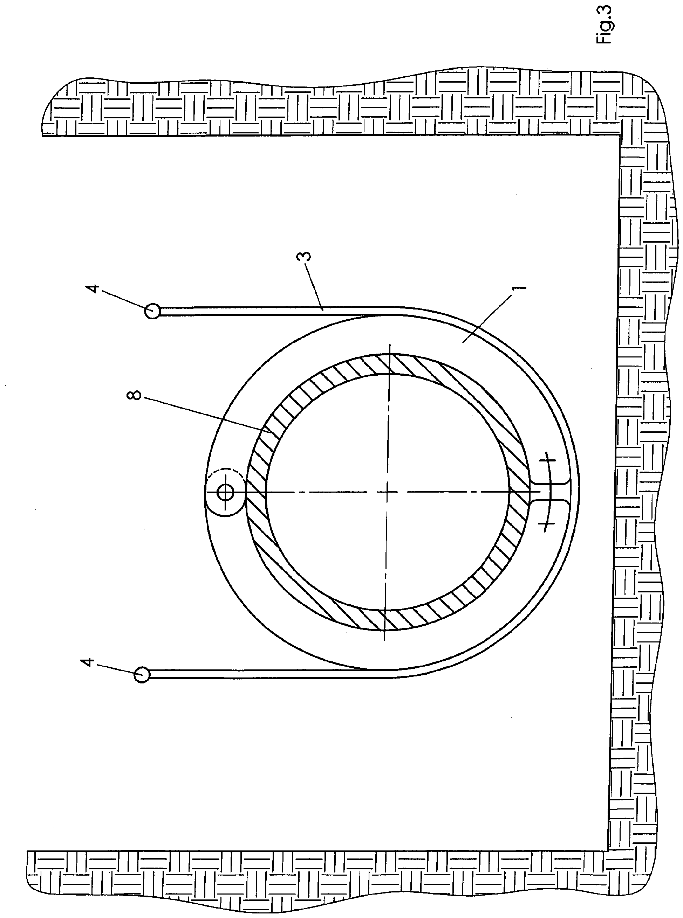

Die Figur 3 zeigt eine Baugrube in einer Seitenansicht. In der Baugrube liegt ein Teilabschnitt eines zylindrischen Werkstücks 8 frei. Die Baugrube erstreckt sich im Wesentlichen senkrecht zur Figurenebene und das zylindrische Werkstück 8 ist in dieser Richtung für eine Bearbeitung freigelegt. Auch die untere Außenkontur des zylindrischen Werkstücks 8 liegt frei und kann von dem Werkzeugträger 1 und dem Zugmittel . 3 umgeben werden.

Die Figur 3 zeigt, dass um das zylindrische Werkstück 8 der Werkzeugträger 1 angeordnet ist und das zylindrische Werkstück 8 zumindest teilweise in Umfangsrichtung umgibt. In Anlage zu dem Werkzeugträger 1 ist das Zugmittel 3 dargestellt.

Die Figur 4 zeigt eine Ausführungsform eines Werkzeugträgers 1, wie er an einem zylindrischen Werkstück 8 anliegt. Mit dem am Werkzeugträger 1 befestigten Werkzeug 2 kann das zylindrische Werkstück 8 bearbeitet werden, wenn der Werkzeugträger 1 zusammen mit dem Werkzeug 2 um das zylindrische Werkstück 8 bewegt wird. Der Werkzeugträger 1 hält das Werkzeug 2 in Anlage zum zylindrischen Werkstück 8 derart, dass eine Bearbeitung möglich ist. Der Werkzeugträger 1 umspannt das zylindrische Werkstück 8. Der Werkzeugträger 1 weist Werkzeugträgersegmente 9, 10 auf, die mittels eines Bolzens 11 verschwenkbar zueinander verbunden sind. Die Form der Werkzeugträgersegmente 9, 10 ist im Wesentlichen kreisbogensegmentförmig bezogen auf die Richtung senkrecht zur Betätigungs- bzw. Bewegungsrichtung des Werkzeugträgers 1. Die Außenkontur der Werkzeugträgersegmente 9, 10 bzw. die Einhüllende des Werkzeugträgers 1 entspricht im Wesentlichen einem zur Außenkontur des zylindrischen Werkstücks 8 parallelen Verlauf.

Die Werkzeugträgersegmente 9, 10 können um das zylindrische Werkstück 8 gelegt werden. Werden die Werkzeugträgersegmente 9, 10 um das zylindrische Werkstück 8 gelegt, so gelangen als Führungsrollen ausgestaltete Führungsmittel 12, die am Werkzeugträger 1 beziehungsweise den Werkzeugträgersegmenten 9, 10 befestigt sind, in Anlage mit dem zylindrischen Werkstück 8. Die Führungsmittel 12 sind um eine Achse 13, die sich quer zur Bewegungsrichtung des Werkzeugträgers 1 erstreckt, drehbar. Wenn die Werkzeugträgersegmente 9, 10 an dem zylindrischen Werkstück 8 angelegt wurden, können die beiden Werkzeugträgersegmente 9, 10 mittels eines Verbindungselements 14 verbunden werden; das Verbindungselement 14 verspannt die Werkzeugträgersegmente 9, 10 am zylindrischen Werkstück 8. Der Werkzeugträger 1 kann mittels des Verbindungselements 14 umfänglich um das zylindrische Werkstück 8 geschlossen werden. Liegt der Werkzeugträger 1 an dem zylindrischen Werkstück 8 an, befindet sich das Werkzeug 2 in einer Bearbeitungsposition zum Bearbeiten des zylindrischen Werkstücks 8. Bei dem in Figur 4 dargestellten Ausführungsbeispiel ist das Werkzeug 2 als Messer ausgestaltet, das in eine Ummantelung des zylindrischen Werkstücks 8 schneidet und das Werkzeug 2 kann um das zylindrische Werkstück 8 geführt werden. Zum Drehen des Werkzeugträgers 1 wird das Zugmittel 3 in Anlage zum Werkzeugträger 1 gebracht, und eine im Wesentlichen dem in den Figuren 1a bis 1e dargestellten Bewegungsablauf entsprechende Betätigung wird durchgeführt, wobei mit dem in der Figur 4 dargestellten Werkzeugträger 1 eine Rotation im Uhrzeigersinn durchgeführt wird, welche durch den am Zugmittel 3 dargestellten Pfeil, der die Bewegungsrichtung des Werkzeugträgers 1 angibt, symbolisiert ist. Bei dem in der Figur 4 dargestellten Ausführungsbeispiel des Zugmittels 3 ist der Bereich 15, der mit dem Werkzeugträger 1 in Anlage gelangt, nicht biegeschlaff ausgestaltet.

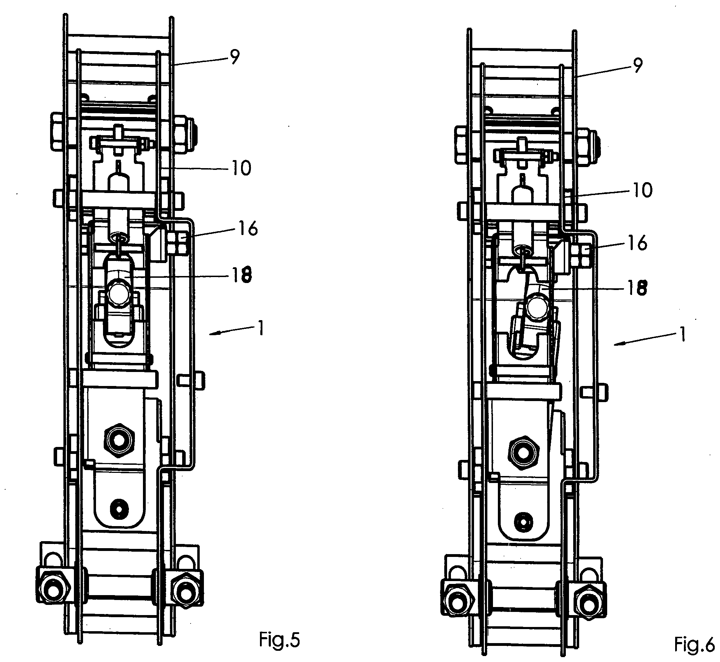

Die Figuren 5 und 6 zeigen den Werkzeugträger 1 der Figur 4 in einer zur Figur 4 senkrechten Ansicht. Das Werkzeug 2 ist in einem Werkzeughalter 18 gehalten. Der Werkzeughalter 18 kann zusammen mit dem Werkzeug 2 relativ zum Werkzeugträger 1 derart verschwenkt werden, dass die Bearbeitungsrichtung des Werkzeugs 2 nicht in der Ebene verlaufen muss, die senkrecht zur Bewegungsrichtung des Werkzeugträgers 1 ist. Während in der Figur 5 die Bearbeitungsrichtung des Werkzeugs 2 im Wesentlichen senkrecht zur Bewegungsrichtung des Werkzeugträgers 1 sein kann (das Messer schneidet senkrecht in das zylindrische Werkstück 8), ist die Bearbeitungsrichtung des Werkzeugs 2 im Wesentlichen unter einem kleinen Winkel gegenüber der Darstellung in Figur 5 geneigt (das Messer schneidet in einem kleinen Winkel versetzt zur Senkrechten). Der Werkzeughalter 18 kann mittels eines von außerhalb der Baugrube betätigbaren als Schraube ausgestalteten Verstellmittels 16 verschwenkt werden.

## Patentansprüche

1. Verfahren zum Bearbeiten eines zylindrischen Werkstücks (8) in Form eines Einschneidens in die äußere Schicht oder Schichten in umfänglicher Richtung des zylindrischen Werkstücks (8), umfassend die Schritte: Anordnen eines Werkzeugträgers (1) mit einem Werkzeug (2) am zylindrischen Werkstück (8), Anlegen eines Zugmittels (3) am Werkzeugträger (1), Übertragen der auf das Zugmittel (3) ausgeübten Kraft auf das Werkzeug (2) zum Ausüben einer Bewegung des Werkzeugträgers (1) um das Werkstück (8), **gekennzeichnet durch** Lösen des Zugmittels (3) vom Werkzeugträger (1) und mehrmaliges Wiederholen eines erneuten Anlegens des Zugmittels (3) und Übertragens der auf das Zugmittel (3) ausgeübten Kraft auf das Werkzeug (2) sowie Lösens des Zugmittels (3) zwecks Bearbeitung des Werkstücks (8).

2. Verfahren nach Anspruch 1, **gekennzeichnet durch** Umgeben des zylindrischen Werkstücks (8) mit dem Werkzeugträger (1).

3. Verfahren nach Anspruch 1 oder 2, **gekennzeichnet durch** ein zumindest teilweise biegeschlaffes Zugmittel (3).

4. Verfahren nach einem der Ansprüche 1 bis 3, **gekennzeichnet durch** Drehen des Werkzeugträgers (1) in einer Richtung um das zylindrische Werkstück (8).

5. Verfahren nach einem der Ansprüche 1 bis 4, **gekennzeichnet durch** Verstellen des Werkzeugs (2) im Werkzeugträger (1) zumindest in einer Endposition.

6. Vorrichtung zum Bearbeiten in Form eines Einschneidens in die äußere Schicht oder Schichten in umfänglicher Richtung eines zylindrischen Werkstücks, umfassend ein an einem Werkzeugträger (1) gehaltenes Werkzeug (2), wobei der Werkzeugträger (1) derart ausgestaltet ist, dass der Werkzeugträger (1) das zylindrische Werkstück (8) zumindest teilweise umgibt, **dadurch gekennzeichnet, dass** ein vom Werkzeugträger (1) lösbar ausgestaltetes Zugmittel (3) vorgesehen ist und das Zugmittel (3) und der Werkzeugträger (1) derart ausgestaltet sind, um einen Kraft- und/oder Formschluss zwischen dem Zugmittel (3) und dem Werkzeugträger (1) auszubilden und um mittels einer auf das Zugmittel (3) ausgeübten Kraft den Werkzeugträger (1) zu drehen.

7. Vorrichtung nach Anspruch 6, **dadurch gekennzeichnet, dass** das Zugmittel (3) zumindest teilweise biegeschlaff ist.

8. Vorrichtung nach Anspruch 6 oder 7, **dadurch gekennzeichnet, dass** am Werkzeugträger (1) Führungselemente (12) zum Führen des Werkzeugträgers (1) relativ zum zylindrischen Werkstück (8) vorgesehen sind.

9. Vorrichtung nach einem der Ansprüche 6 bis 8, **dadurch gekennzeichnet, dass** der Werkzeugträger (1) ein Verstellmittel (16) aufweist, mit dem das Werkzeug (2) relativ im Werkzeugträger (1) neigbar ist.

10. Vorrichtung nach einem der Ansprüche 6 bis 9, **dadurch gekennzeichnet, dass** der Werkzeugträger (1) mindestens zwei Segmente (9, 10) aufweist, die zumindest teilweise einen Winkelbereich des zylindrischen Werkstücks (8) überspannen, und die Vorrichtung ein Verbindungselement (14) aufweist, so dass mit Segmenten (9, 10) und Verbindungselementen (14) der Werkzeugträger (1) das zylindrische Werkstück (8) umgibt.

## Claims

1. Method for machining a cylindrical workpiece (8) involving cutting into the outer layer, or layers, in a circumferential direction of the cylindrical workpiece (8), comprising the steps: arrangement of a tool carrier (1) with a tool (2) on the cylindrical workpiece (8), application of a traction means (3) to the tool carrier (1), transmission of the force exerted on the traction means (3) to the tool (2), in order to exert a movement of the tool carrier (1) around the workpiece (8), **characterized by** release of the traction means (3) from the tool carrier (1) and multiple repetition of a renewed application of the traction means (3) and transmission of the force exerted on the traction means (3) to the tool (2) and also release of the traction means (3) for the purpose of machining the workpiece (8).

2. Method according to Claim 1, **characterized by** surrounding the cylindrical workpiece (8) with the tool carrier (1).

3. Method according to Claim 1 or 2, **characterized by** an at least partially flexible traction means (3).

4. Method according to one of Claims 1 to 3, **characterized by** turning of the tool carrier (1) in a direction about the cylindrical workpiece (8).

5. Method according to one of Claims 1 to 4, **characterized by** adjustment of the tool (2) in the tool carrier (1) at least in a final position.

6. Device for machining involving cutting into the outer layer, or layers, in a circumferential direction of a cylindrical workpiece, comprising a tool (2) held on a tool carrier (1), wherein the tool carrier (1) is configured in such a manner that said tool carrier (1) surrounds the cylindrical workpiece (8) at least partially, **characterized in that** a traction means (3) designed to be detachable from the tool carrier (1) is provided and the traction means (3) and the tool carrier (1) are designed in such a manner as to create a force fit and/or a form fit between the traction means (3) and the tool carrier (1) and to turn the tool carrier (1) by means of a force exerted on the traction means (3).

7. Device according to Claim 6, **characterized in that** the traction means (3) is at least partially flexible.

8. Device according to Claim 6 or 7, **characterized in that** guide elements (12) for guiding the tool carrier (1) relative to the cylindrical workpiece (8) are provided on the tool carrier (1).

9. Device according to one of Claims 6 to 8, **characterized in that** the tool carrier (1) has an adjustment means (16) with which the tool (2) is relatively tiltable in the tool carrier (1).

10. Device according to one of Claims 6 to 9, **characterized in that** the tool carrier (1) has at least two segments (9, 10) which at least partially span an angle range of the cylindrical workpiece (8) and the device has a connection element (14) so that the tool carrier (1) surrounds the cylindrical workpiece (8) with segments (9, 10) and connection elements (14).

## Revendications

1. Procédé d'usinage d'une pièce d'ouvrage cylindrique (8) sous forme d'une incision de la couche ou des couches extérieures dans la direction circonférentielle de la pièce d'ouvrage cylindrique (8) comprenant les étapes suivantes : placement d'un porte-outil (1) sur la pièce d'ouvrage cylindrique (8) au moyen d'un outil (2), application d'un moyen de traction (3) au porte-outil (1), transfert de la force exercée sur le moyen de traction (3) sur l'outil (2) pour exercer un mouvement du porte-outil (1) autour de la pièce d'ouvrage (8), **caractérisé par** le détachement du moyen de traction (3) du porte-outil (1) et la répétition multiple d'une nouvelle application du moyen de traction (3) et du transfert de la force exercée sur le moyen de traction (3) sur l'outil (2) ainsi que du détachement du moyen de traction (3) aux fins d'usinage de la pièce d'ouvrage (8).

2. Procédé selon la revendication 1, **caractérisé par** l'entourage de la pièce d'ouvrage cylindrique (8) par le porte-outil (1).

3. Procédé selon la revendication 1 ou 2, **caractérisé par** un moyen de traction (3) au moins partiellement souple.

4. Procédé selon l'une des revendications de 1 à 3, **caractérisé par** la rotation du porte-outil (1) dans une direction autour de la pièce d'ouvrage cylindrique (8).

5. Procédé selon l'une des revendications de 1 à 4, **caractérisé par** l'ajustage de l'outil (2) dans le porte-outil (1) au moins dans une position finale.

6. Dispositif d'usinage sous forme d'une incision de la couche ou des couches extérieures dans la direction circonférentielle d'une pièce d'ouvrage cylindrique, comprenant un outil (2) tenu par un porte-outil (1), le porte-outil (1) étant configuré de telle manière que le porte-outil (1) entoure au moins partiellement la pièce d'ouvrage cylindrique (8), **caractérisé en ce que** un moyen de traction (3) détachable du porte-outil (1) est prévu et que le moyen de traction (3) et le porte-outil (1) sont configurés de manière à former un assemblage par adhérence et/ou emboîtement entre le moyen de traction (3) et le porte-outil (1) et à faire tourner le porte-outil (1) au moyen d'une force exercée sur le moyen de traction (3).

7. Dispositif selon la revendication 6, **caractérisé en ce que** le moyen de traction (3) est au moins partiellement souple.

8. Dispositif selon la revendication 6 ou 7, **caractérisé en ce que** des éléments de guidage (12) sont prévus sur le porte-outil (1) destinés à guider le porte-outil (1) par rapport à la pièce d'ouvrage cylindrique (8).

9. Dispositif selon l'une des revendications de 6 à 8, **caractérisé en ce que** le porte-outil (1) présente un moyen d'ajustage (16) permettant d'incliner l'outil (2) relativement dans le porte-outil (1).

10. Dispositif selon l'une des revendications de 6 à 9, **caractérisé en ce que** le porte-outil (1) présente au moins deux segments (9, 10) qui enjambent au moins en partie un secteur angulaire de la pièce d'ouvrage cylindrique (8) et que le dispositif présente un élément de liaison (14) de telle sorte que le porte-outil (1) entoure la pièce d'ouvrage cylindrique (8) par les segments (9, 10) et les éléments de liaison (14).
